# EUROPÄISCHE PATENTSCHRIFT

(11) **EP 3 439 259 B1**
(45) Veröffentlichungstag und Bekanntmachung des Hinweises auf die Patenterteilung: **27.11.2019**
(21) Anmeldenummer: 17184448.3
(22) Anmeldetag: 02.08.2017
(51) Int. Cl.: H04L 29/06

(54) **HÄRTEN EINES KOMMUNIKATIONSGERÄTES**
HARDENING OF A COMMUNICATION DEVICE
DURCISSEMENT D'UN APPAREIL DE COMMUNICATION

(43) Veröffentlichungstag der Anmeldung: 06.02.2019
(73) Patentinhaber: Siemens Aktiengesellschaft, 80333 München (DE)
(72) Erfinder: Kirchner, Michael, 81737 München (DE); Vamos, Benedikt, 85579 Neubiberg (DE)

(56) Entgegenhaltungen:
- EP-A1- 2 169 904
- US-A1- 2007 261 111
- US-A1- 2013 124 729

## Beschreibung

Die Erfindung betrifft Verfahren und Vorrichtungen zum Härten eines Kommunikationsgerätes.

Durch eine zunehmende Vernetzung von Geräten, wie beispielsweise von IT-Systemen oder Automatisierungskomponenten für Industrie 4.0, besteht in zunehmender Weise die Gefahr, dass derartige Geräte durch gezielte Angriffe manipuliert werden.

Gemäß einem Stand der Technik ist bekannt, dass zwei Geräte gemäß dem OSI-Modell (OSI - Open Systems Interconnection Model, see https://en.wikipedia.org/wiki/osi_model) Daten austauschen können. Hierzu definiert das OSI-Modell sieben Schichten (in Englisch: Layers), welche spezifische Aufgaben innerhalb des OSI-Modells übernehmen. So übernimmt die Schicht 4, auch als Transportschicht bezeichnet, "funktionale und prozessuale Aufgaben zum Übertragen von längenvariablen Datensequenzen von einer Quelle zu einem Ziel über einen oder mehrere Netzwerke, wobei eine Qualität an Servicefunktionen aufrecht erhalten wird", siehe oben genannter Wikipedia-Artikel. Aus dem Stand der Technik ist als Schicht-4-Protokoll ein TCP-Protokoll (TCP - Transmission Control Product, siehe RFC 793) und ein UDP (UDP - User Datagramm Protocol, siehe RFC 768) bekannt.

Im Folgenden wird nur ein Teil aus dem OSI-Schichtmodell näher erläutert, der zum Verständnis der Erfindung bei einer Übertragung von Datenpaketen gemäß dem OSI-Schichtmodell hilfreich sind. In Schicht 3, der Vermittlungsschicht, werden Datenpakete von einem Knoten zu einem nächsten Netzwerkknoten übermittelt. Die Übermittlung der Datenpakete wird beispielsweise mit Hilfe des IP-Protokolls (IP - Internet Protocol, RFC 791) durchgeführt. Das Datenpaket der Schicht 3 umfasst neben den Schicht 3 spezifischen Parametern auch ein Schicht 4 Datenpaket, in dem zur Bearbeitung des Schicht 4 Datenpakets Schicht 4 Adressen angegeben sind. Diese Schicht 4 Adressen werden als Ports bezeichnet. Ein jeweiliger Port ermöglicht unabhängig von den Eigenschaften des Kommunikationsnetzes, welches durch die Schicht 3 behandelt wird, anwendungsorientiert Daten auszutauschen. Daher umfasst ein Schicht 4 Datenpaket beispielsweise gemäß TCP bzw. UDP sowohl einen Quellport als auch einen Zielport. Der Zielport gibt an, an welchen Port eines Empfängers des Datenpakets das Schicht 4 Datenpaket übermittelt werden soll. Hingegen gibt der Quellport an, an welchen Port des Absenders des Datenpakets eine Antwort gemäß Schicht 4 Datenpaket geschickt werden soll. Somit beschreiben die Ports für Sender bzw. Empfänger jeweils Dienste, die das zu übertragende Schicht 4 Datenpaket im Rahmen der Kommunikation zwischen Sender und Empfänger bzw. auch zwischen Empfänger und Sender verarbeiten sollen. Zur Vereinfachung einer Kommunikation wurden durch Standardisierungsorganisationen einigen Ports jeweils ein Dienst fest zugeordnet. So wird beispielsweise auf einem Port 80 eine Anfrage gemäß http-Protokoll (http - Hypertext Transfer Protocol, siehe RFC2616) standardisiert.

Mit Hilfe der Angabe des Ports ist es somit im Allgemeinen möglich, dass ein Sender einem Empfänger eine Anfrage schickt, die der Empfänger für den Sender bearbeiten soll. So kann eine Anfrage einer Webseite im Internet gemäß Port 80 an einen Webserver gestellt werden, der dann auf einem Port 81 an das anfragende Gerät die Webseite übermittelt. Im Allgemeinen ist es auch möglich, dass die Antwort auf einem Port mit einer Nummer zwischen 1024 und 65535, auch als TCP high port im Englischen bezeichnet, gesendet wird.

Somit wird durch das Bereitstellen, auch als Öffnen bezeichnet, eines oder mehrerer Ports der Transportschicht ermöglicht, dass Kommunikationspartner sich verbinden können, um Dienste gegenseitig zu nutzen.

Bei Sicherheitsüberprüfungen wird jedoch das Problem festgestellt, dass neben jenen Ports, die für die Aufgaben eines spezifischen Systems erreichbar sein müssen, noch zahlreiche weitere Ports geöffnet sind, die für die eigentliche Funktionalität des Systems gar nicht oder nicht zwingend notwendig sind. Dazu zählen beispielsweise:
- Ein Webinterfache, z.B. zum Abruf eines Gerätestatus oder Hilfeseiten;
- Mehrere unterschiedliche Administrationsinterfaces, die inhaltlich die gleiche Funktionalität anbieten, wie z.B. Telnet, SSH (SSH - RFC4251);
- Ports, die lediglich zu Debug und/oder Entwicklungszwecken gedacht sind.

Die erwähnten Ports sind oftmals deshalb aktiviert, um die Einrichtung eines Geräts oder Systems so einfach wie möglich zu gestalten bzw. einen Konfigurationsaufwand bei Auftreten von Konfigurationsproblemen einfach zu halten. Ferner kann auch ein Grund darin bestehen, dass Entwickler und/oder Personen, die die Anlage in Betrieb nehmen, schlichtweg einige Ports übersehen, die offen sind, aber für den Betrieb nicht benötigt werden.

Durch diese Praxis ist ein Angriff eines Geräts oder eines Systems über ein Netzwerk deutlich vereinfacht. Ferner ist es relativ komplex für Personen, die das Gerät oder das System einrichten, alle für die Inbetriebnahme und den Betrieb des gerätespezifischen Systems benötigten Ports bereitzuhalten und zu einem späteren Zeitpunkt ggf. zu schließen.

Ports können beispielsweise auch aufgrund von Wartungsarbeiten unbeabsichtigter Weise geöffnet werden, um zusätzliche Software zu installieren oder um Fehlfunktionen des Systems besser verfolgen zu können.

Die EP 2 169 904 A1 offenbart ein Verfahren zum sicheren Kommunizieren von Prozesssteuerungsdaten über ein Prozesssteuerungsnetzwerk. Dieses Verfahren umfasst die Schritte Erkennen eines kommunikativ mit dem Prozesssteuerungsnetzwerk verbundenen Netzwerkgeräts, Festschreiben einer Adresstabelle des Netzwerkgeräts, Aussetzen einer oder mehrerer Überbrückungsfunktionen des Netzwerkgeräts, Verarbeiten eines an dem Netzwerkgerät empfangenen Frames, wenn der Frame eine autorisierte physikalische Adresse enthält, die der Adresse der festgeschriebenen Adresstabelle entspricht, und Fallenlassen des empfangenen Frames, wenn der Frame eine nicht autorisierte physikalische Adresse enthält.

Die US 2007/0261111 A1 betrifft eine verteilte Implementierung einer Firewall, bei welcher ein oder mehrere Geräte in einem Netzwerk so konfiguriert sind, dass sie Firewall-Dienste für andere Geräte im Netzwerk bereitstellen. Jeder der Firewall-Dienstanbieter kann seine Fähigkeiten in Bezug auf Firewall-Dienste veröffentlichen. Entsprechend können Dienstempfänger ihre Anforderungen für Firewall-Dienste veröffentlichen. Eine Managerfunktion kann die Anfragen und Angebote vermitteln, um Dienste und Anforderungen zu erfüllen.

Die US 2013/0124729 A1 offenbart eine Kommunikationsvorrichtung, welche eine Kommunikationsverbindung mit einer anderen Kommunikationsvorrichtung aufbaut und eine Kommunikationssitzung mit einer anderen Kommunikationsvorrichtung unter Verwendung der hergestellten Verbindungsverbindung einrichtet. Nachdem eine vorbestimmte Anzahl von Kommunikationssitzungen eingerichtet wurde, beschränkt die Kommunikationsvorrichtung andere Kommunikationssitzungen als die vorbestimmte Anzahl von eingerichteten Kommunikationssitzungen.

Somit besteht die Aufgabe der vorliegenden Erfindung darin, Vorrichtungen, Verfahren und Verwendungen anzugeben, mit denen ein Gerät, welches im Rahmen seiner Kommunikation mit Ports kommuniziert, in einfacher und effizienter Weise gegenüber Angriffe über das Netzwerk gehärtet werden kann.

Diese Aufgabe wird durch die Merkmale der Ansprüche gelöst. Weiterbildungen der Erfindung sind den abhängigen Ansprüchen zu entnehmen.

Die Erfindung betrifft ein Verfahren zum Härten eines Kommunikationsgeräts, mit folgenden Schritten:
- Identifizieren einer Nutzung zumindest eines Ports, über den an das Kommunikationsgerät mittels einer Nachricht eine Anfrage gestellt wird;
- Ausgeben eines Signals zum Sperren des zumindest einen Ports, falls nach einer vorgebbaren Zeitdauer entweder die Nutzung des jeweiligen Ports als gering erkannt wird oder keine Nutzung des jeweiligen Ports erkannt wird und falls zumindest ein weiterer Port aus einer Referenzliste an Ports, die den Port und den zumindest einen weiteren Port umfasst, offen ist.

In diesem Zusammenhang bedeutet gehärtet, dass ein Angriff über das Netz gegenüber der bekannten Vorgehensweise erschwert wird, d.h. das Gerät besser von Angriffen geschützt ist. Unter Kommunikationsgerät ist jede Art von Gerät zu verstehen, welches Nachrichten empfangen und Anfrage, die in den Nachrichten vorhanden sind, ausführen kann, wie beispielsweise ein Förderband oder ein Roboter in einer Fertigungsstraße, ein Patientensystem oder ein Röntgengerät in einem Krankenhaus oder auch ein Steuergerät in einem Energieversorgungsnetz.

Ein Vorteil der Erfindung liegt darin begründet, dass mit den Schritten ein Härten des Kommunikationsgerätes in einfacher aber wirkungsvoller Art und Weise erreicht werden kann. Zudem wird durch die gewählten Schritte eine Manipulation von außen gezielt vermieden, sodass auch die erfinderischen Schritte selbst gegenüber Angriffen gehärtet sind.

Erfindungsgemäß wird das Signal zum Sperren des Ports ausgegeben, falls zumindest ein weiterer Port aus einer Referenzliste an Ports, die den Port und den zumindest einen weiteren Port umfasst, offen ist.

Hierdurch wird in zuverlässiger Weise ermöglicht, dass zumindest ein Dienst immer ansprechbar bleibt und somit wird eine Fehlfunktion des Kommunikationsgerätes, falls alle Dienste oder eine bestimmte Art von Diensten durch Schließen der zugehörigen Ports nicht mehr erreichbar sind, vermieden.

In einer vorteilhaften Ausbildung der Erfindung wird ein Speichern eines Zeitstempels an dem die Nutzung des zumindest einen Ports erkannt wird und ein Erkennen der Nutzung als gering, falls nach der vorgebbaren Zeitdauer der Zeitstempel älter als ein Referenzzeitstempel detektiert wird, durchgeführt. Hierdurch kann in einfacherweise das fehlerhafte Konfigurieren eines Ports durch einen Administrator in einfacher und zuverlässiger Weise erkannt und behoben werden.

Eine Weiterbildung der Erfindung kann durch das Speichern einer Anzahl an identifizierten Anfragen an dem die Nutzung des zumindest einen Ports erkannt wird und durch das Erkennen der Nutzung als gering, falls nach der vorgebbaren Zeitdauer die Anzahl geringer als ein Referenzanzahl detektiert wird, realisiert werden. Auch hierdurch kann in einfacher und zuverlässiger Weise das fehlerhafte Konfigurieren eines Ports durch einen Administrator erkannt und behoben werden.

In einer weiteren vorteilhaften Ausbildung der Erfindung werden folgende Schritte durchgeführt: Speichern eines Datenvolumens, die bei Erkennen der Nutzung des zumindest einen Ports übertragen wird und Erkennen der Nutzung als gering, falls nach der vorgebbaren Zeitdauer das Datenvolumen geringer als ein Referenzdatenvolumen detektiert wird. Hierdurch kann in einfacher und sicherer Art und Weise ein offener Port erkannt werden, der nicht benutzt wird und daher zur Härtung des Kommunikationsgerätes geschlossen wird.

In einer weiteren vorteilhaften Ausgestaltung der Erfindung wird in Abhängigkeit von einem durch den jeweiligen Port adressierbaren Dienst die Zeitdauer unterschiedlich gewählt wird. Hierdurch wird eine Zuverlässigkeit der Ausführung der Erfindung erhöht, da bestimmte Dienste, die seltener genutzt werden, bei längerer Inaktivität noch offen bleiben, wohingegen Dienste, bei denen eine häufigere Nutzung erwartet wird, schneller bei mangelnder oder geringer Nutzung geschlossen werden.

In einer Weiterbildung der Erfindung kann die vorgebare Zeitdauer nach zumindest einem der folgenden Kriterien ausgewählt werden:
a) Je schwerer der durch den Port adressierbarer Dienst (DST) des Kommunikationsgerätes manipulierbar ist, desto größer wird die vorgebbare Zeitdauer gewählt.
   Hierdurch wird das Kommunikationsgerät weiter gehärtet, da für ein Kommunikationsgerät, welches einem Angreifer leichter zugänglich ist mit einer kürzeren vorgebbaren Zeitdauer belegt wird.
b) Je mehr Rechte zur Ausführung des durch den Port adressierbaren Dienst benötigt werden, desto kleiner wird die vorgebbare Zeitdauer gewählt.
   Hierdurch wird das Kommunikationsgerät weiter gehärtet, da in dem Kommunikationsgerät für Dienste, die einen größeren Schaden verursachen können und daher zur Ausführung mehr Rechte benötigen, durch Herabsetzen der vorgebbaren Zeitdauer das Härten erhöht wird. Mehr Rechte wie mehr Zugriffsrechte, können auch zum Zugriff auf bestimmte Daten im Netzwerk benötigt werden, wobei dadurch ein Abfließen von sensiblen Daten begünstigt werden kann. Durch Herabsetzen der vorgebbaren Zeitdauer wird in diesem Fall das Risiko eines Verlustes von sensiblen Daten reduziert.
c) Je größer ein Erwartungswert ist, dass der Port in der Anfrage benutzt wird, desto kleiner wird die vorgebbare Zeitdauer gewählt.
   Hierdurch wird das Kommunikationsgerät weiter gehärtet, da durch Berücksichtigung des Erwartungswertes auch ein Einsatz des Kommunikationsgerätes abhängen kann. Hierdurch kann auch applikationsspezifisch der ein oder andere Port frühzeitig geschlossen werden, da auf diesen Ports ggfs. kaum oder kein Datenverkehr erwartet wird.
d) Falls das Kommunikationsgerät eine IP Adresse aus dem globalen Internet aufweist, wird die vorgebbare Zeitdauer größer gewählt, als wenn das Kommunikationsgerät seine IP Adresse aus einem lokalen Intranet bezieht. Hierdurch wird das Kommunikationsgerät weiter gehärtet, weil damit ein Angriffspotential durch fehlende Sicherungsmaßnahmen, wie beispielsweise eine Firewall, die bei einem direkten Anschluss des Kommunikationsgerätes an das Internet fehlen kann, durch geringere Zeitdauern reduziert werden kann.

Die Erfindung betrifft ferner eine Vorrichtung zum Härten eines Kommunikationsgeräts,
mit folgenden Einheiten:
- Zuordneneinheit zum Identifizieren einer Nutzung zumindest eines Ports, über den an das Kommunikationsgerät mittels einer Nachricht eine Anfrage gestellt wird;
- Steuereinheit zum Ausgeben eines Signals zum Sperren des zumindest einen Ports, falls nach einer vorgebbaren Zeitdauer entweder die Nutzung des jeweiligen Ports als gering erkannt wird oder keine Nutzung des jeweiligen Ports erkannt wird.

Zudem kann in einer optionalen Weiterbildung die Vorrichtung ferner mittels der Zuordneneinheit, der Steuereinheit und/oder einer Datenbank derart ausgestaltet sein, dass zumindest ein Schritt einer der oben genannten Verfahrensschritte ausführbar ist.

Die Vorrichtung und ihre optionalen Weiterbildungen weisen die gleichen Vorteile auf, wie die korrespondierenden Verfahrensschritte.

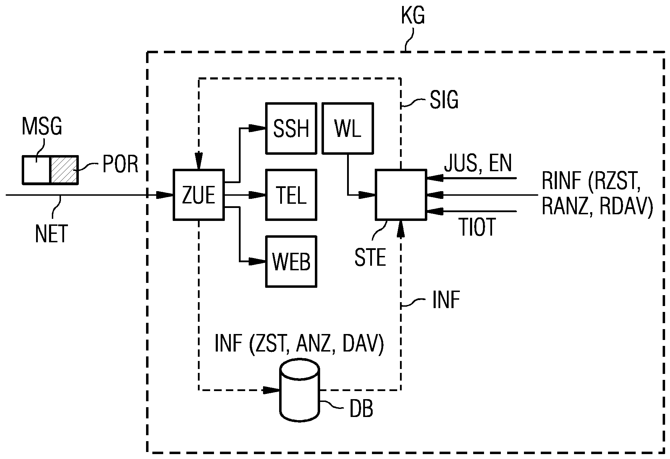

Die Erfindung und ihre Weiterbildungen werden anhand einer einzigen Figur näher erläutert. Diese zeigt ein Kommunikationsgerät mit Einheiten zum Realisieren der Erfindung. Elemente mit gleicher Funktion und Wirkungsweise sind mit denselben Bezugszeichen versehen.

Mit Hilfe der Figur wird die Erfindung anhand von Beispielen näher erläutert. Für ein genaueres Verständnis bzgl. des OSI-Schichtenmodels und der standardisierten Vorgehensweise zum Austausch von Datenpaketen gemäß zugehöriger IETF RFC Dokumente (IETF - Internet Engineering Task Force, siehe www.ietf.org; RFC - Request for Comments) wird auf die Einleitung verwiesen.

Ein Kommunikationsgerät KG, wie beispielsweise eine Steuerlogik für eine Fertigungsstraße, ist zum Austausch von Nachrichten MSG über ein Netzwerk NET, wie bspw. LAN (LAN - Local Access Network), mit einer weiteren Recheneinheit verbunden (die weitere Recheneinheit ist in der Figur nicht gezeigt). Über die LAN-Verbindung werden die Nachrichten in Form von Paketen an das Kommunikationsgerät KG geschickt. Derartige Nachrichten signalisieren jeweils eine Anfrage an das Kommunikationsgerät, wobei durch die jeweilige Anfrage in dem Kommunikationsgerät spezifische Dienste angestoßen werden sollen, die nachfolgend beispielsweise Informationen mittels einer oder mehrere weiterer Nachrichten an die weitere Recheneinheit, wie beispielsweise Hilfeseiten zur Bedienung des Kommunikationsgerätes, übertragen sollen. Daneben kann durch die Anfrage auch eine Konfiguration in dem Kommunikationsgerät angestoßen werden. Damit das Kommunikationsgerät weiß, welche Anwendung gestartet werden soll, umfasst die Anfrage jeweils eine Portnummer POR, im folgenden auch als Port bezeichnet, die teilweise im Stand der Technik standardisiert und somit spezifischen Diensten zuordenbar ist. Beispielsweise wird die Portnummer 22 dem SSH-Dienst SSH (SSH- The Secure Shell (SSH) Protocol Architecture, siehe RFC 4251), die Portnummer 23 einem Telnet-Dienst TEL (siehe RFC 854) und die Portnummer 80 einem http-Dienst WEB (http - Hypertext Transport Protocol, siehe RFC 2616). Somit kann durch Angabe des Ports, die Anfrage durch eine Zuordneneinheit ZUE direkt an den zu dem Port dazugehörigen Dienst SSH, TEL, WEB weitergeleitet werden.

Bei Empfang der Anfrage generiert die Zuordneneinheit ZUE eine spezifische Information INF zu dem der identifizierten Anfrage zugeordneten Port, wie beispielsweise einen Zeitstempel, der angibt, zu welchem Zeitpunkt die Nachricht MSG mit der Anfrage durch die Zuordeneinheit ZUE empfangen wurde. Die Zuordeneinheit ZUE leitet die erzeugte Information INF an eine Datenbank DB zum Zwischenspeichern weiter. Nach und nach erreichen mehrere Anfragen die Zuordeneinheit ZUE, die bei jeder Anfrage entsprechende Informationen erzeugt, an die Datenbank weiterleitet und zudem die Dienste SSH, TEL, WEB über die Anfrage informiert, damit diese Dienste nachfolgend entsprechende Aktionen ausführen können.

Nach Ablauf einer vorgebbaren Zeitdauer TIOT von einem Tag ermittelt eine Steuereinheit STE, welche der im Kommunikationsgerät geöffneten Ports gesperrt werden sollen, bzw. welche der Ports weiterhin offengehalten werden sollen. "Sperren" eines Portes bedeutet, dass die Zuordeneinheit ZUE Anfragen für einen spezifischen Port nicht an den jeweiligen Dienst des identifizierten Ports weiterleitet. Umgekehrt bedeutet in diesem Zusammenhang "offen", dass ein Dienst zu einem bestimmten Port weiterhin erreichbar ist.

Zu jeder Information eines jeweiligen Ports in der Datenbank DB gibt es eine Referenzinformation. So ist beispielweise in der Datenbank als Information für Port 22 ein Zeitstempel ZST mit 27.03.2017, 12.13 Uhr abgelegt. Dieser Zeitstempel gibt an, wann das letzte Mal eine Anfrage für den Port 22 durch die Zuordeneinheit ZUE empfangen wurde. Ferner gibt es für den Port 22 die Referenzinformation in Form eines Referenzzeitstempels RZST, der gesetzt ist zu 27.03.2017, 8.15 Uhr. Der Referenzzeitstempel gibt an, wie alt die Information in der Datenbank maximal sein darf, damit die Steuereinheit STE erkennt, dass Anfragen für den jeweiligen Dienst aktuell noch benötigt werden und der Port des zugehörigen Dienstes weiterhin offenzuhalten ist. Die Steuereinheit STE überprüft nun, ob der Referenzzeitstempel jünger ist als der Zeitstempel, d.h. RZST < ZST. Da der Referenzzeitstempel nicht jünger ist als der Zeitstempel, d.h. der Zeitstempel ist jünger als der Referenzzeitstempel. Somit wird der Zugang zu dem durch den Port identifizierten Dienst aktuell benötigt, so dass der Port 22 nicht gesperrt, d.h. offen gelassen, wird.

In einer weiteren Ausführungsform des obigen Beispiels wird als Information für den jeweiligen Port eine Anzahl ANZ an Anfragen als Information in der Datenbank abgelegt. Als Referenzinformation wird eine Referenzanzahl RANZ vorgegeben, wobei die Referenzanzahl anzeigt, wie viele Anfragen zu dem zugeordneten Port vorliegen müssen, um das Sperren des der Anfrage zugeordneten Ports zu unterbinden. Beispielsweise wurde während der vorgebbaren Zeitdauer TIOT von einem Monat zweimal eine Anfrage an den Port 23, d.h. zur Nutzung des Telnet-Dienstes, gestellt. Somit ist die Information "Anzahl" des Ports 23 gleich ANZ=2. Als Referenzanzahl wird für den Port 23 ein Wert RANZ=5 gesetzt. Somit wird die Steuereinheit STE nach Ablauf der vorgebbaren Zeitdauer von einer Woche erkennen, dass der Dienst Telnet seltener angefordert als durch die Referenzinformation gefordert, so dass ein Signal SIG zum Sperren des Ports 23 an die Zuordeneinheit ZUE zum Sperren des Ports 23 gesendet wird.

Desweiteren kann als Information ein Datenvolumen DAV zugeordnet werden, wobei das Datenvolumen DAV anzeigt, welche Datenmenge, beispielsweise in Bytes, über den in der identifizierten Anfrage zugeordneten Port übertragen wird. Als Referenzinformation wird ein Referenzdatenvolumen RDAV zugeordnet, wobei das Referenzdatenvolumen vorgibt, welche Datenmenge, beispielsweise in Bytes, zu dem über die identifizierte Anfrage zugeordneten Port übertragen werden muss, um zum Erkennen, dass die Nutzung des durch den Port identifizierten Diensts nicht als gering erkannt wird und somit ein Sperren des Ports unterbunden wird. Ist beispielsweise einem Web-Dienst auf einem Port 2000 lediglich ein Datenvolumen von DAV=150 Bytes während der vorgebbaren Zeitdauer TIOT übertragen worden und ist als Referenzdatenvolumen RDAV=1000 Bytes zugeordnet, so wird durch die Steuereinheit STE nach Ablauf der vorgebbaren Zeitdauer erkannt, dass die Nutzung des Ports 2000 wegen DAV < RDAV gering ist, so dass hieraus abgeleitet werden kann, dass der Port 2000 mit Hilfe eines zu erzeugenden Signals gesperrt werden soll. Das Sperren kann dadurch realisiert werden, dass Nachrichten mit einer Anfrage für einen gesperrten Port, d.h. auch für einen gesperrten Dienst, im Kommunikationsgerät ohne ein Weiterleiten an den jeweiligen Dienst gelöscht werden.

In den obigen Ausführungen der verschiedenen Varianten wurde angegeben, dass das Signal zum Sperren eines jeweiligen Ports durch die Steuereinheit erzeugt und direkt durch die Zuordeneinheit ZOE in ein Sperren des Ports umgesetzt wird. In einer Variante der obigen Beispiele kann das Signal SIG zum Sperren eines jeweiligen Ports auch einem Administrator z.B. in Form einer Bildschirmausgabe, eines akustischen Signals oder in Form einer weiteren Nachricht z.B. als MMS (MMS - Multi Media Message) übertragen werden. Mit Hilfe dieses Signals kann der Administrator dann entscheiden, ob er der Zuordeneinheit ZUE mitteilt, dass ein bestimmter Port geschlossen werden soll oder nicht.

In den obigen Beispielen wurde angegeben, dass das Kommunikationsgerät eine oder mehrere Anfragen zum Adressieren eines seiner Dienste erhält. Die Erfindung ist auch anwendbar für den Fall, dass über die vorgebbare Zeitdauer für einen vorgebbaren Dienst, z.B. dem Telnet-Dienst auf Port 23, keinerlei Anfragen durch die Zuordeneinheit ZUE empfangen werden. In diesem Fall wird in der Datenbank keine Information INF zu dem Port 23 hinterlegt. Bei einer Prüfung der offenen Ports erkennt die Steuereinheit dann, dass der Dienst des Ports 23 in der vorgegebenen Zeitdauer nicht adressiert wurde und kann dann, da für diesen Port keine Information gespeichert wurde, veranlassen, dass mit Hilfe des Signals SIG die Zuordeneinheit den Port und somit den Dienst Telnet sperrt. In den obigen Beispielen wurden die Dienste, die über die jeweiligen Ports adressierbar sind, jeweils separat betrachtet. Dadurch kann es passieren, dass bei längerer Inaktivität diverser Dienste die Zuordeneinheit die Ports zum Adressieren dieser Dienste sperrt, so dass möglicherweise ein Administrieren des Kommunikationsgerätes nicht mehr sinnvoll möglich ist. Hierzu ist der Erfindung eine Referenzliste WL vorgesehen, in der die Steuereinheit STE bei der Entscheidung, welche der Ports gesperrt werden sollen, Abhängigkeiten zwischen den verschiedenen Ports erkennen kann. Beispielsweise ist in der Referenzliste WL hinterlegt, dass zumindest einer der drei Dienste, die durch die Ports 22, 23 und 81 erreichbar sind, erreichbar bleiben muss. Hierzu kann die Steuereinheit, die in der Datenbank hinterlegten Informationen zu den besagten Ports abrufen und diejenigen Ports sperren, die am seltensten verwendet werden. Beispielsweise wurde in dem vorgegebenen Zeitraum der Dienst WEB auf Port 81 und der Dienst SSH auf Port 22 nicht adressiert, so dass in der Datenbank keine Information zu den diesen Diensten zugeordneten Ports verfügbar sind. Auch der Dienst TEL auf Port 23 wurde schon längere Zeit nicht mehr adressiert. Jedoch erkennt die Steuereinheit, dass zwar der Dienst Telnet längere Zeit nicht mehr adressiert wurde, jedoch bereits in der Vergangenheit zumindest einmal eine Anfrage für den diesem Dienst zugeordneten Port identifiziert wurde. Somit entscheidet die Steuereinheit, dass die Ports 22 und 443 gesperrt werden, wo hingegen der Port 23 weiterhin geöffnet bleibt.

In den obigen Beispielen wurden die Informationen zu den jeweiligen Ports zu einer einzigen vorgebbaren Zeitdauer TOIT analysiert und dann ggf. die zugehörigen Ports gesperrt. In einer Abwandlung der Beispiele kann die vorgegebene Zeitdauer auch individuell für jeden Port eingestellt werden. So kann eine längere vorgebbare Zeitdauer für den Fall gewählt werden, dass der durch den Port adressierte Dienst des Kommunikationsgerätes schwerer manipuliert werden kann. Beispielsweise wird eine Kommunikation über den Port 22 für den Dienst SSH verschlüsselt übertragen. Somit ist es einem Angreifer von außen erschwert diese Kommunikation zu stören. Hiermit kann die vorgebbare Zeitdauer für den Port 22 auf eine Woche gesetzt werden, wo hingegen die vorgebbare Zeitdauer für die Dienste auf den Ports 23 und 81 auf einen Tag gesetzt wird.

Ferner kann die vorgebbare Zeitdauer für den jeweiligen Port alternativ oder zusätzlich derart individuell bestimmt werden, dass je mehr Rechte JUS zur Durchführung des durch den Port adressierbaren Dienstes benötigt werden, desto kleiner der Wert der vorgebbaren Zeitdauer ausgewählt. Ferner kann die vorgebbare Zeitdauer jeweils kleiner gewählt werden, je höher ein Erwartungswert EW für die Nutzung des jeweiligen Dienstes ist. Ferner kann die vorgebbare Zeitdauer von einem Einsatz des Kommunikationsgerätes in einem Intranet oder Internet eingestellt werden. So kann die vorgebbare Zeitdauer bei einem Einsatz des Kommunikationsgerätes im Intranet höher gewählt werden, da eine Wahrscheinlichkeit für einen bösartigen Angriff des jeweiligen Dienstes geringer ist, als bei einem direkt mit dem Internet verbundenen Kommunikationsgerät. Dies kann dadurch realisiert werden, dass falls das Kommunikationsgerät eine IP Adresse (IP - Internet Protocol) aus dem globalen Internet aufweist, die vorgebbare Zeitdauer größer gewählt wird, als wenn das Kommunikationsgerät seine IP Adresse aus einem lokalen Intranet bezieht. Gemäß Aufteilung der IP Adressen sind vorgegebene IP Adressräume für die lokale bzw. private Nutzung reserviert, wie z.B. IPv4 10.0.0.0 bis 10.255.255.255, 172.16.0.0 bis 172.31.255.255 und 192.168.1.1 bis 192.168.255.255. In IPv6 heißen diese lokalen bzw. privaten Adressen "Unique Local Adresses". Andere IP Adressen sind für die globale Nutzung, d.h. für das Internet, freigegeben. In einer weiteren Ausbildung kann die vorgebbare Zeitdauer auch davon abhängig gemacht werden, ob in dem mit dem Netzwerk verbundenen Kommunikationsgerät lediglich oder überwiegend Maschine zu Maschine Nachrichten versendet werden, wie beispielweise in einer Fertigungsanlage. Hierbei kann die vorgebbare Zeitdauer höher eingestellt werden, als für den Fall, dass Nutzer Webseiten aus dem Internet über das Netzwerk NET laden, die möglichweise mit schadhaften Bestandteilen, wie cookies, versehen sind.

Die Einheiten Zuordnungseinheit, Datenbank und Steuereinheit können die Verfahrensschritte der Erfindung in Software, Hardware und/oder in einer Kombination aus Software- und Hardware durchführen. Dazu können die Verfahrensschritte in Form eines maschinenlesbaren Codes in einem Speicher zur Ausführung abgelegt sein, wobei der Speicher mit einem Prozessor und Ein- bzw. Ausgabemodulen über zumindest einen Bus zum Austausch von Daten verbunden ist.

## Patentansprüche

1. Verfahren zum Härten eines Kommunikationsgeräts (KG), mit folgenden Schritten:
- Identifizieren einer Nutzung zumindest eines Ports (POR), über den an das Kommunikationsgerät (KG) mittels einer Nachricht (MSG) eine Anfrage gestellt wird;
**gekennzeichnet durch**
- Ausgeben eines Signals (SIG) zum Sperren des zumindest einen Ports (POR), falls nach einer vorgebbaren Zeitdauer (TIOT) entweder die Nutzung des jeweiligen Ports (POR) als gering erkannt wird oder keine Nutzung des jeweiligen Ports (POR) erkannt wird und falls zumindest ein weiterer Port aus einer Referenzliste (WL) an Ports, die den Port (POR) und den zumindest einen weiteren Port umfasst, offen ist.

2. Verfahren nach Anspruch 1, mit:
Speichern eines Zeitstempels (ZST) an dem die Nutzung des zumindest einen Ports (POR) erkannt wird;
Erkennen der Nutzung als gering, falls nach der vorgebbaren Zeitdauer (TIOT) der Zeitstempel (ZST) älter als ein Referenzzeitstempel (RZST) detektiert wird.

3. Verfahren nach einem der vorhergehenden Ansprüche mit:
Speichern einer Anzahl (ANZ) an identifizierten Anfragen an dem die Nutzung des zumindest einen Ports (POR) erkannt wird; Erkennen der Nutzung als gering, falls nach der vorgebbaren Zeitdauer (TIOT) die Anzahl (ANZ) geringer als ein Referenzanzahl (RANZ) detektiert wird.

4. Verfahren nach einem der vorhergehenden Ansprüche mit:
Speichern eines Datenvolumens (DAV), die bei Erkennen der Nutzung des zumindest einen Ports (POR) übertragen wird; Erkennen der Nutzung als gering, falls nach der vorgebbaren Zeitdauer (TIOT) das Datenvolumen (DAV) geringer als ein Referenzdatenvolumen (RDAV) detektiert wird.

5. Verfahren nach einem der vorhergehenden Ansprüche, bei dem
in Abhängigkeit von einem durch den jeweiligen Port (POR) adressierbaren Dienst (DST) die Zeitdauer (TIOT) unterschiedlich gewählt wird.

6. Verfahren nach Anspruch 5, bei dem
die vorgebare Zeitdauer (TIOT) nach zumindest einem der folgenden Kriterien ausgewählt wird:
a) Je schwerer der durch den Port (POR) adressierbarer Dienst (DST) des Kommunikationsgerätes (KG) manipulierbar ist, desto größer wird die vorgebbare Zeitdauer (TIOT) gewählt;
b) Je mehr Rechte (JUS) zur Ausführung des durch den Port (POR) adressierbaren Dienst (DST) benötigt werden, desto kleiner wird die vorgebbare Zeitdauer (TIOT) gewählt;
c) Je größer ein Erwartungswert (EW) ist, dass der Port (POR) in der Anfrage (MSG) benutzt wird, desto kleiner wird die vorgebbare Zeitdauer (TIOT) gewählt;
d) Falls das Kommunikationsgerät (KG) eine IP Adresse aus dem globalen Internet aufweist, wird die vorgebbare Zeitdauer (TIOT) größer gewählt, als wenn das Kommunikationsgerät (KG) seine IP Adresse aus einem lokalen Intranet bezieht.

7. Vorrichtung (VOR) zum Härten eines Kommunikationsgeräts (KG),
umfassend
- eine Zuordneneinheit (ZUE) zum Identifizieren einer Nutzung zumindest eines Ports (POR), über den an das Kommunikationsgerät (KG) mittels einer Nachricht (MSG) eine Anfrage gestellt wird;
**gekennzeichnet durch**
- eine Steuereinheit (STE) zum Ausgeben eines Signals (SIG) zum Sperren des zumindest einen Ports (POR), falls nach einer vorgebbaren Zeitdauer (TIOT) entweder die Nutzung des jeweiligen Ports (POR) als gering erkannt wird oder keine Nutzung des jeweiligen Ports (POR) erkannt wird und falls zumindest ein weiterer Port aus einer Referenzliste (WL) an Ports, die den Port (POR) und den zumindest einen weiteren Port umfasst, offen ist.

8. Vorrichtung (VOR) gemäß Anspruch 7, die ferner mittels der Zuordneneinheit (ZUE), der Steuereinheit (STE) und/oder einer Datenbank (DB) derart ausgestaltet ist, dass zumindest ein Schritt einer der Ansprüche 2 bis 6 ausführbar ist.

## Claims

1. Method for hardening a communication device (KG), having the following steps of:
- identifying use of at least one port (POR), via which a request is submitted to the communication device (KG) by means of a message (MSG);
**characterized by**
- outputting a signal (SIG) for blocking the at least one port (POR) if, after a predefinable period (TIOT), either the use of the respective port (POR) is identified as low or no use of the respective port (POR) is identified and if at least one further port from a reference list (WL) of ports, which comprises the port (POR) and the at least one further port, is open.

2. Method according to Claim 1, comprising:
storing a time stamp (ZST), from which the use of the at least one port (POR) is identified;
identifying the use as low if, after the predefinable period (TIOT), the time stamp (ZST) is detected as being older than a reference time stamp (RZST).

3. Method according to one of the preceding claims, comprising:
storing a number (ANZ) of identified requests, from which the use of the at least one port (POR) is identified;
identifying the use as low if, after the predefinable period (TIOT), the number (ANZ) is detected as being lower than a reference number (RANZ).

4. Method according to one of the preceding claims, comprising:
storing a data volume (DAV) which is transmitted when identifying the use of the at least one port (POR); identifying the use as low if, after the predefinable period (TIOT), the data volume (DAV) is detected as being lower than a reference data volume (RDAV).

5. Method according to one of the preceding claims, in which the period (TIOT) is selected differently depending on a service (DST) which can be addressed by means of the respective port (POR).

6. Method according to Claim 5, in which
the predefinable period (TIOT) is selected according to at least one of the following criteria:
a) the more seriously the service (DST) of the communication device (KG), which can be addressed by means of the port (POR), can be manipulated, the longer the predefinable period (TIOT) is selected to be;
b) the more rights (JUS) are needed to perform the service (DST) which can be addressed by means of the port (POR), the shorter the predefinable period (TIOT) is selected to be;
c) the greater an expected value (EW) of the port (POR) being used in the request (MSG), the shorter the predefinable period (TIOT) is selected to be;
d) if the communication device (KG) has an IP address from the global Internet, the predefinable period (TIOT) is selected to be longer than if the communication device (KG) obtains its IP address from a local intranet.

7. Apparatus (VOR) for hardening a communication device (KG),
comprising
- an assignment unit (ZUE) for identifying use of at least one port (POR), via which a request is submitted to the communication device (KG) by means of a message (MSG);
**characterized by**
- a control unit (STE) for outputting a signal (SIG) for blocking the at least one port (POR) if, after a predefinable period (TIOT), either the use of the respective port (POR) is identified as low or no use of the respective port (POR) is identified and if at least one further port from a reference list (WL) of ports, which comprises the port (POR) and the at least one further port, is open.

8. Apparatus (VOR) according to Claim 7, which is also configured by means of the assignment unit (ZUE), the control unit (STE) and/or a database (DB) in such a manner that at least one step in one of Claims 2 to 6 can be carried out.

## Revendications

1. Procédé de durcissement d'un appareil de communication (KG), comprenant les étapes suivantes :
- identification d'une utilisation d'au moins un port (POR) par le biais duquel une requête est posée à l'appareil de communication (KG) au moyen d'un message (MSG) ;
**caractérisé par**
- l'émission d'un signal (SIG) pour bloquer l'au moins un port (POR) si après une durée (TIOT) prédéfinissable, soit l'utilisation du port (POR) respectif est détectée comme faible, soit aucune utilisation du port (POR) respectif n'est détectée et si au moins un port supplémentaire d'une liste de référence (WL) de ports qui comprend le port (POR) et l'au moins un port supplémentaire, est ouvert.

2. Procédé selon la revendication 1, comprenant :
l'enregistrement d'un horodatage (ZST) sur lequel l'utilisation de l'au moins un port (POR) est détectée ;
la détection de l'utilisation comme faible, si après la durée (TIOT) prédéfinissable, l'horodatage (ZST) est détecté plus ancien qu'un horodatage de référence (RZST).

3. Procédé selon l'une des revendications précédentes, comprenant :
l'enregistrement d'un nombre (ANZ) de requêtes identifiées sur lesquelles l'utilisation de l'au moins un port (POR) est détectée ;
la détection de l'utilisation comme faible, si après la durée (TIOT) prédéfinissable, le nombre (ANZ) est détecté plus faible qu'un nombre de référence (RANZ).

4. Procédé selon l'une des revendications précédentes, comprenant :
l'enregistrement d'un volume de données (DAV), qui est transmis lors de la détection de l'utilisation de l'au moins un port (POR) ;
la détection de l'utilisation comme faible, si après la durée (TIOT) prédéfinissable, le volume de données (DAV) est détecté plus faible qu'un volume de données de référence (RDAV).

5. Procédé selon l'une des revendications précédentes, dans lequel
en fonction d'un service (DST) pouvant être adressé par le port (POR) respectif, la durée (TIOT) est sélectionnée de manière différente.

6. Procédé selon la revendication 5, dans lequel la durée (TIOT) prédéfinissable est sélectionnée selon au moins l'un des critères suivants :
a) plus le service (DST) de l'appareil de communication (KG) pouvant être adressé par le port (PORT) est difficile à manipuler, plus la durée (TIOT) prédéfinissable est sélectionnée grande ;
b) plus des droits (JUS) pour exécuter le service (DST) pouvant être adressé par le port (PORT) sont nécessaires, plus la durée (TIOT) prédéfinissable est sélectionnée petite ;
c) plus une valeur d'attente (EW) pour que le port (POR) soit utilisé dans la requête (MSG) est élevée, plus la durée (TIOT) prédéfinissable est sélectionnée petite ;
d) si l'appareil de communication (KG) présente une adresse IP de l'Internet global, la durée (TIOT) prédéfinissable est sélectionnée plus élevée que lorsque l'appareil de communication (KG) tire son adresse IP d'un Intranet local.

7. Dispositif (VOR) pour durcir un appareil de communication (KG),
comprenant
- une unité d'attribution (ZUE) pour identifier une utilisation d'au moins un port (POR) par le biais duquel une requête est posée à l'appareil de communication (KG) au moyen d'un message (MSG) ;
**caractérisé par**
- une unité de commande (STE) pour émettre un signal (SIG) pour bloquer l'au moins un port (POR) si après une durée (TIOT) prédéfinissable, soit l'utilisation du port (POR) respectif est détectée comme faible, soit aucune utilisation du port (POR) respectif n'est détectée et si au moins un port supplémentaire d'une liste de référence (WL) de ports qui comprend le port (POR) et l'au moins un port supplémentaire, est ouvert.

8. Dispositif (VOR) selon la revendication 7, qui est ainsi conçu pour qu'au moins une étape d'une des revendications 2 à 6 soit exécutable, outre qu'au moyen de l'unité d'attribution (ZUE), de l'unité de commande (STE) et/ou d'une base de données (DB).
